# EUROPÄISCHE PATENTSCHRIFT

(11) **EP 1 504 297 B1**
(45) Veröffentlichungstag und Bekanntmachung des Hinweises auf die Patenterteilung: **14.02.2007**
(21) Anmeldenummer: 03747381.6
(22) Anmeldetag: 02.05.2003
(51) Int. Cl.: G02B 6/38, H01R 24/04, H01R 13/66

(54) **Hybrid-Steckverbindung**
Hybrid plug connecter
Connecteur enfichable hybride

(30) Priorität: 02.05.2002 CH 748022002; 12.03.2003 CH 395032003
(43) Veröffentlichungstag der Anmeldung: 09.02.2005
(73) Patentinhaber: Reichle & De-Massari AG, 8622 Wetzikon (CH)
(72) Erfinder: REICHLE, Martin, CH-8620 Wetzikon (CH)
(74) Vertreter: Alder, Hans Rudi
(86) Internationale Anmeldenummer: PCT/CH2003/000286
(87) Internationale Veröffentlichungsnummer: WO 2003/093888

(56) Entgegenhaltungen:
- DE-U- 20 113 501
- US-A- 5 704 802
- US-A- 5 741 152
- US-A- 6 159 039
- US-A1- 2002 076 172
- US-B1- 6 206 724

## Beschreibung

Die vorliegende Erfindung betrifft eine Hybrid-Steckbuchse gemäss Oberbegriff des Anspruchs 1, einen dazu passenden Hybrid-Stecker gemäss Oberbegriff des Anspruchs 6, einen Zusatzstecker gemäss Oberbegriff des Anspruchs 9 sowie einen Adapterrahmen gemäss Obergriff des Anspruchs. 10.

Steckverbindungssysteme finden ihre Verwendung beispielsweise in der Computer-Technik, in der Telekommunikation und Bild- und Tonübertragung. Der vermehrte Einsatz dieser Techniken im Heim- und Bürobereich führt zu einer für den Nichtspezialisten unüberschaubaren Vielfalt von unterschiedlichen Stecksystemen. Es sind deshalb Tendenzen erkennbar, welche zur Zusammenlegung von mehreren, bisher unterschiedlich aufgebauten Verkabelungs- oder Stecksystemen führen. So wurde in letzter Zeit die Kommunikations- und Datenverkabelung in der sogenannten "universellen Gebäudeverkabelung" (UGV) zusammengeführt. Diese UGV entwickelt sich weiter, um weitere Anwendungsbereiche (z.B. Multimedia, Gebäudeautomation, Apparatesteuerungen) ausserhalb des Bürobereichs zu erschliessen (beispielsweise Heimbereich, Industriebereich): Unterstützt wird diese Entwicklung durch die Verbreitung des IP-Übertragungsprotokolls und die Entwicklung von Femspeisungsmöglichkeiten im Ethernet-Bereich gemäss IEEE 802.3. Eine weitere Entwicklung zeigt sich im Ausbau der Datenbandbreite, vor allem im Heimbereich, sowie Entwicklungen im Bereich der Kunststoff-Lichtwellenleiter mit einfach zu installierenden Verkabelungen.

Deshalb sind bereits verschiedene Universalschnittstellen, respektive Hybrid-Steckverbindungssysteme bekannt, mit welchen unterschiedliche Kabelarten, beispielsweise Kupferkabel und Lichtwellenleiter, nebeneinander gekoppelt werden können. Ein derartiges Hybrid-Verbindungssystem ist beispielsweise in der EP 1 102 099 beschrieben. Dieses Hybrid-Verbindungssystem erlaubt es, optische Leiter und Kupferkabel gleichzeitig und unabhängig voneinander zu koppeln. Dazu wird ein Buchsengehäuse vorgeschlagen, in welchem sowohl Lichtleiterkabel als auch Kabel für die Übertragung elektrischer Signale nebeneinander geführt werden. Dieses Hybrid-Verbindungssystem ist verhältnismässig voluminös und erlaubt es nicht, konventionelle RJ45-Stecker gemäss Norm ISO/IEC 11801 zu verwenden.

Eine Hybrid-Steckbuchse, welche es erlaubt, sowohl konventionelle RJ45-Stecker zu verwenden, als auch optische Kontakte herzustellen, ist in der WO 98/18033 beschrieben. Bei dieser Buchse sind optisch leitende Elemente vorgesehen, an welche, mit Hilfe eines geeignet dimensionierten Adapters, optische Leiter angekoppelt werden können. Mit dieser Hybrid-Steckbuchse kann entweder eine elektrische Verbindung oder eine optische Verbindung hergestellt werden, jedoch können nicht verschiedenartige Leitersysteme gleichzeitig verwendet werden. Diese Hybrid-Steckbuchse lässt also die gleichzeitige Verwendung von verschiedenen voneinander unabhängigen Steckern nicht zu.

Dieser Mangel soll durch den Steckverbinder gemäss DE-U 201 13 501 behoben werden. Dieser Steckverbinder weist eine Steckbuchse auf, in welche ein RJ45-Stecker und gleichzeitig ein optisches Kabelpaar eingesteckt werden können. Dazu weist die Steckbuchse ein zusätzliches Gehäuse auf, an welchem Aufnahmeöffnungen für die Führung von Steuer- und Leistungskabel angebracht sind. Diese Hybrid-Steckbuchse weist gegenüber konventionellen RJ45-Steckbuchsen erweiterte Aussendimensionen auf und ist ungeeignet, um in bestehenden Patch-Panels oder Multimedia-Dosen eingesetzt werden zu können.

Zusammenfassend, erfordern die bekannten Hybrid-Stecksystem alle entweder einen besonders ausgestalteten Hybrid-Stecker, d.h. dass für diese Systeme bestehende, konventionelle Stecker nicht verwendet werden können, oder stellen Einzellösungen für vorgegebene Kabelkombinationen dar, d.h. lassen die gleichzeitige Verwendung von voneinander unabhängigen Steckern nicht zu, oder erfordern eine Hybrid-Steckbuchse mit Aussendimensionen, welche die Abmasse der internationalen Norm (IEC 60603-7) überschreiten und deshalb nicht in bestehenden Patch-Panels oder Multimedia-Dosen verwendet werden können.

Es ist deshalb die Aufgabe der vorliegenden Erfindung, eine Universalschnittstelle für ein Hybrid-Stecksystem zu schaffen, welche es erlaubt, mit Hilfe von genormten Steckern für verschiedene Anwendungen, insbesondere für RJ45-Stecker, die Verbindung von elektrischen Kabeln (z.B. Kupferkabel für die Telekommunikation, Signalkabel) mit einer Verbindung von anderen elektrischen Kabeln (z.B. abgeschirmten Steuer- oder Leistungskabeln) oder mit einer genormten Verbindung von optischen Leitern zu kombinieren.

Insbesondere ist es Aufgabe der vorliegenden Erfindung, eine Hybrid-Steckbuchse zu schaffen, welche in bestehende Patch-Panels oder Multimedia-Dosen eingebaut werden kann, d.h. keinen Aussenquerschnitt aufweist, der die Abmasse der Norm IEC 60603-7 überschreitet.

Erfindungsgemäss wird diese Aufgabe mit einer Universalschnittstelle gelöst, welche eine Hybrid-Steckbuchse mit den Merkmalen des Anspruchs 1 umfasst und insbesondere durch eine Hybrid-Steckbuchse für international normierte "Small Form Factor", respektive "SFF"-Stecksysteme, sowie RJ45-Stecker gemäss IEC 60603-7, bei welcher in den Stufen seitlich des Rastbereichs durchgehende Hohlräume, im folgenden auch Durchführungskanäle genannt oder geeignet angeordnete Aussparungen, aufweist. Unter SFF-Stecksystemen werden im folgenden die in der Norm IEC 60603-7 (1996-11) definierten Buchsen und dazu passenden Stecker verstanden.

**Tabelle 1 - Small Form Factor (SFF) Buchsen**

| Variante gem. Norm IEC 60603-7 (1996-11) | Höhe in mm | Breite in mm |
|---|---|---|
| Typ A, Variante 01 | a1 =18,0 -18,5 | c1 =15,6 -16,1 |
| Typ A, Variante 02 | a1 =17,8 -18,3 | c1 =13,8 -13,9 |
| Typ A, Variante 03 | a1 =19,3 max. | p1 =14,4 -14,6 |
| Typ B, Variante 01 | a1 = 16,1 - 16,5 | c1 =15,5 -15,6 |
| Typ B, Variante 02 | a1 = 15,8 -16,2 | c1 = 15,5 -15,6 |
| Typ B, Variante 03 | a1 = 10,8 - 11,2 | c1 =15,5 -15,6 |
| Typ B, Variante 04 | a1 =14,9 -15,1 | c1 = 15,1 - 15,4 |
| Typ B, Variante 05 | a1 = 14,9 - 15,1 | c1 =15,1-15,4 |
| Typ B, Variante 06 | a1 = 17,2 -17,4 | c1 = 15,1 - 15,4 |
| Typ B, Variante 07 | a1 = 15,8 - 16,0 | x1 = 15,4 - 15,6 |

In einer ersten Ausführungsform weist die erfindungsgemässe Hybrid-Steckbuchse ein Gehäuse mit einer steckerseitigen Öffnung respektive Kavität für die Aufnahme eines normierten RJ45-Steckers auf. Die unmittelbar neben dem Rastbereich dieser steckerseitigen Kavität liegenden Stufen sind erfindungsgemäss mit Durchführungskanäle versehen. Diese Durchführungskanäle führen geräteseitig in Rillen einer Kabelführungsplatte, in welche beispielsweise Lichtwellenleiter eingelegt werden können. Bei dieser Ausführungsform kann auf die Kabelführungsplatte eine Halteplatte befestigt werden, welche einerseits die montierten Kabel sichert und schützt und welche andererseits dazu dienen kann, das gesamte Gehäuse im Gerät in einem Gerät, einer Dose oder einem Patchpanel zu befestigen. Steckerseitig kann die erfindungsgemässe Hybrid-Steckbuchse mit einem Steckerhalter ergänzt werden, welcher beispielsweise mit Hilfe von Rastelementen an der mit Rastöffnungen versehenen Montageplatte befestigt werden kann.

In einer anderen Ausführungsform kann die Kabelführungsplatte für die Führung von Mini-Koax-Kabeln oder Speisekabeln besonders ausgestaltet sein. Es versteht sich, dass die Durchführungskanäle mit geeigneten Kupplungselementen oder Kabelführungselementen versehen sein können.

Bevorzugte Weiterbildungen und Ausführungsformen der erfindungsgemässen Hybrid-Steckbuchse weisen die Merkmale der Unteransprüche 2 - 5 auf.

Die erfindungsgemässen Durchführungskanäle erlauben also die unabhängige Aufnahme eines elektrischen und/oder optischen Bauteils, insbesondere von POFs (Plastic Optical Fibres) gemäss IEEE 1394, Mini-Coax-Kabeln, Stromversorgungs- oder Steuerkabeln, optischen Elementen (beispielsweise Leuchtdioden für das Monitoring) oder Bauteile für kabellose Übertragungssysteme. Insbesondere erlaubt die erfindungsgemässe Universal-Schnittstelle die Kombination von bekannten Verkabelungssystemen, wie sie im Multimedia-Bereich, im Industriebereich oder im (kabellosen) Bürobereich verwendet werden.

Darüber hinaus erlaubt der Abstand der Durchführungskanäle die Verwendung von bestehenden Lichtwellenleiter-Stecksystemen gemäss Norm IEEE 1394.

Im folgenden soll die Erfindung anhand verschiedener Ausführungsbeispiele mit Hilfe der Figuren näher erläutert werden. Es zeigen:
- Fig. 1a - 1j: verschiedene Ausführungsformen international normierter SFF-Steckbuchsen für RJ45-Stecker;
- Fig. 2: eine schematische Darstellung für die von der Norm festgelegten Abmasse dieser international normierten RJ45-Steckbuchsen;
- Fig. 3: eine räumliche Darstellung einer erfindungsgemässen Universalschnittstelle mit einer Steckbuchse für mindestens einen zusätzlichen optischen Leiter;
- Fig. 4: eine räumliche Darstellung einer erfindungsgemässen Schnittstelle mit einem Steckerhalter;
- Fig. 5: eine bodenseitige Ansicht der erfindungsgemässen Steckbuchse;
- Fig. 6: eine bodenseitige Ansicht der erfindungsgemässen Steckbuchse mit Steckerhalter und montierter Modul-Halteplatte;
- Fig. 7: eine Ansicht der erfindungsgemässen Steckbuchse mit elektrischen Leitern;
- Fig. 8: eine Explosionsdarstellung einer erfindungemässen Steckbuchse mit elektrischen Leitern;
- Fig. 9: eine Explosionsdarstellung einer Unteransicht einer erfindungsgemässen Steckbuchse mit Mini-Koax-Kabel;
- Fig. 10 - 20: die Montage von Lichtwellenleitern in eine erfindungsgemässe Steckbuchse;
- Fig. 21 - 23: die Verwendung eines Adapterrahmens für die Positionierung eines normierten PM-POF-Steckers;
- Fig. 24 - 30: den Aufbau und die Montage eines aufsetzbaren Zusatzsteckers;

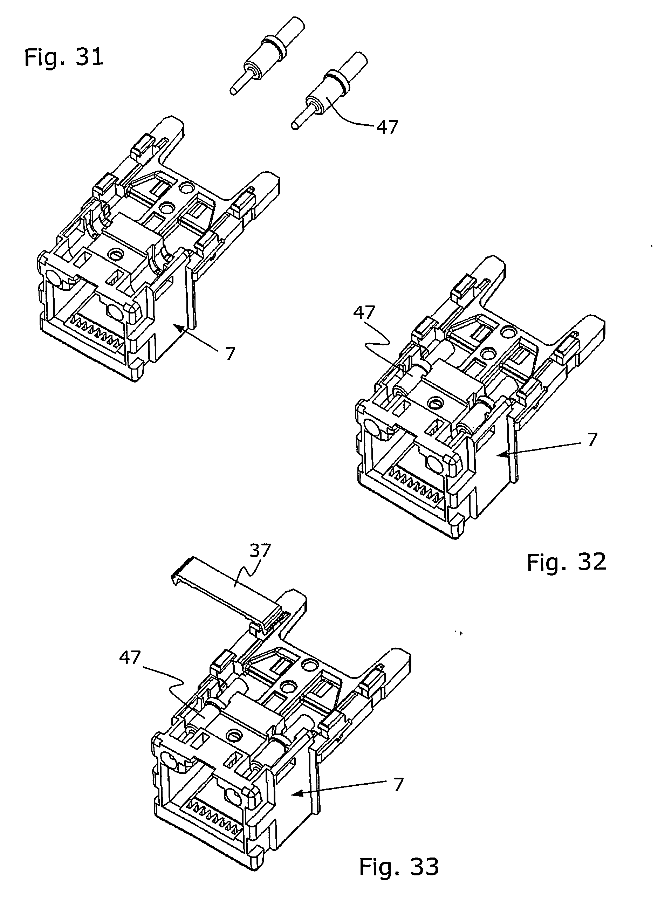

- Fig. 31 -35: die Montage von buchsenseitigen Kontakten für einen Zusatzstecker;
- Fig. 36, 37: eine erfindungsgemässe Universal-Schnittstelle.

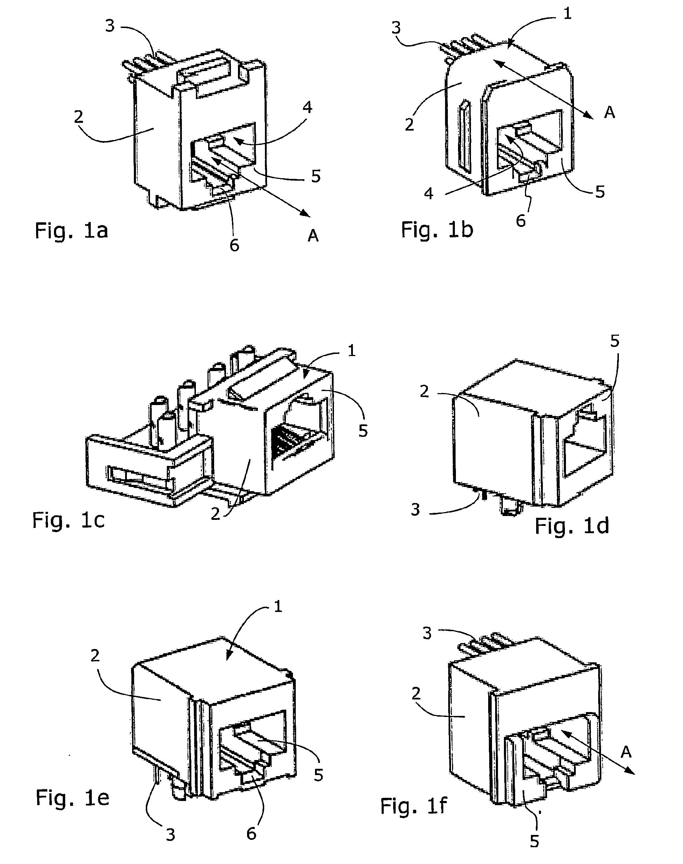

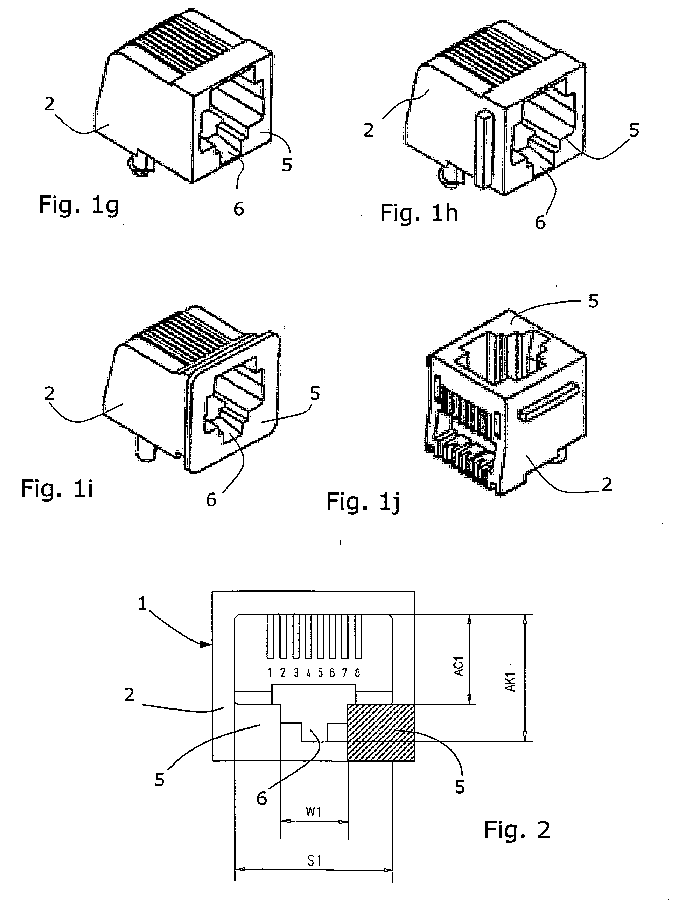

Die Figuren 1a bis 1j zeigen verschiedene Ausführungsformen von Steckbuchsen, wie sie dem internationalen Standard IEC 60603-7 entsprechen. Diese Buchsen 1 weisen ein Gehäuse 2 auf, dessen äussere Gestaltung und Dimensionierung den jeweiligen Anforderungen und Einsatzgebieten entgegenkommt und insbesondere durch die Norm IEC 60603-7 begrenzt ist. So zeigen die Gehäuse 2 gemäss Fig. 1a, 1b und 1f geräteseitige Kontakte 3, welche in Steckrichtung A aus dem Gehäuse ragen. Die Gehäuse 2 gemäss Fig. 1c, 1d und 1e weisen demgegenüber geräteseitige Kontakte 3 auf, welche rechtwinklig zur Steckrichtung A aus dem Gehäuse 2 ragen. Steckerseitig sind diese Gehäuse 2 mit einer Kavität 4 für die Aufnahme eines RJ45-Steckers versehen. Diese Kavität hat im wesentlichen einen rechteckigen Öffnungsquerschnitt, an dessen einen längeren Seite eine zusätzliche Nut für die Aufnahme einer Rastlasche des RJ45-Steckers vorgesehen ist. Diese Nut bildet einen Rastbereich 6 und führt dazu, dass im Eckbereich unmittelbar neben dem Rastbereich 6 des Gehäuses 2 Stufen 5 entstehen.

Figur 2 zeigt die Vermassung und Dimensionierung des genormten Querschnittes einer SFF-Steckbuchse 1 gemäss Norm IEC 60603-7. Die vorgegebenen Werte sind aus der folgenden Tabelle ersichtlich:

**Tabelle 2**

| Bezeichnung | Maximum (mm) | Minimum (mm) |
|---|---|---|
| S₁ | 12,04 | 11,84 |
| W₁ | 6,38 | 6,22 |
| AC₁ | 6,96 | 6,76 |
| AK₁ | 8,66 | 8,38 |

Diese Daten machen deutlich, dass die neben dem Rastbereich 6 liegenden Gehäusebereiche 5 einen Querschnitt von mindestens etwa 3 x3 mm² aufweisen und geeignet sind, um zusätzliche Durchführungskanäle aufzunehmen.

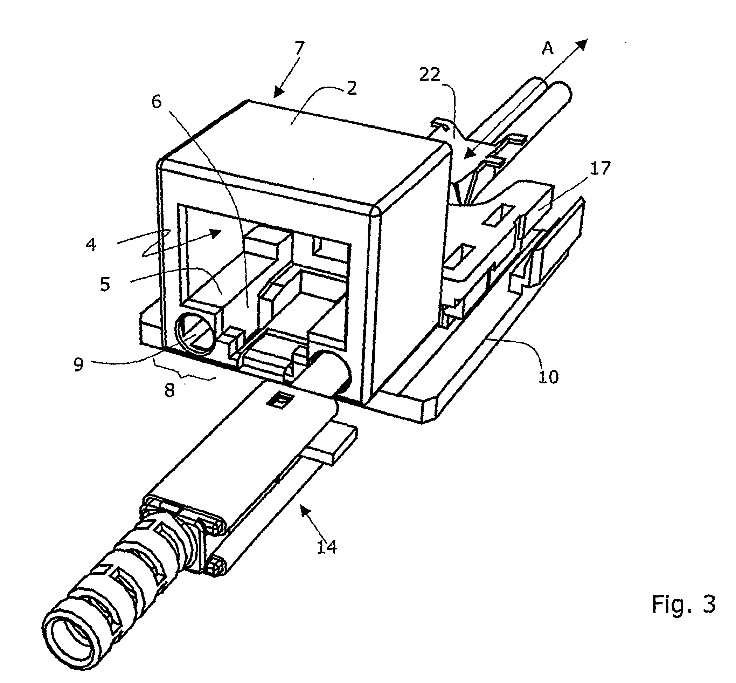

Figur 3 zeigt eine erfindungsgemässe Hybrid-Steckbuchse 7 mit einem Gehäuse 2 mit einer steckerseitigen Kavität 4 für die Aufnahme eines normierten RJ45-Steckers. Bei dieser Buchse 7 werden die Leiter geräteseitig in Steckrichtung A aus dem Gehäuse 2 herausgeführt. Die unmittelbar neben dem Rastbereich 6 der Kavität 4 liegenden Eckbereiche 8 weisen stufenförmige Gehäusebereiche 5 auf, in welchen Durchführungskanäle 9 vorgesehen sind. Es versteht sich, dass die Steckbuchse 7 in modularer Art und Weise ergänzt werden kann. So zeigt Figur 3 eine geräteseitig am Gehäuse 2 angebrachte Kabelführungsplatte 17, an welcher beispielsweise Mittel 22 für die Zugentlastung angebracht sind. Mit Hilfe einer Modul-Halteplatte 10 kann das Gehäuse 2 beispielsweise an bestehenden Dosen- und Patchsystemen befestigt werden. Die Durchführungskanäle 9 sind derart dimensioniert, dass diese beispielsweise mit einem optischen Stecker 14 zusammenwirken können.

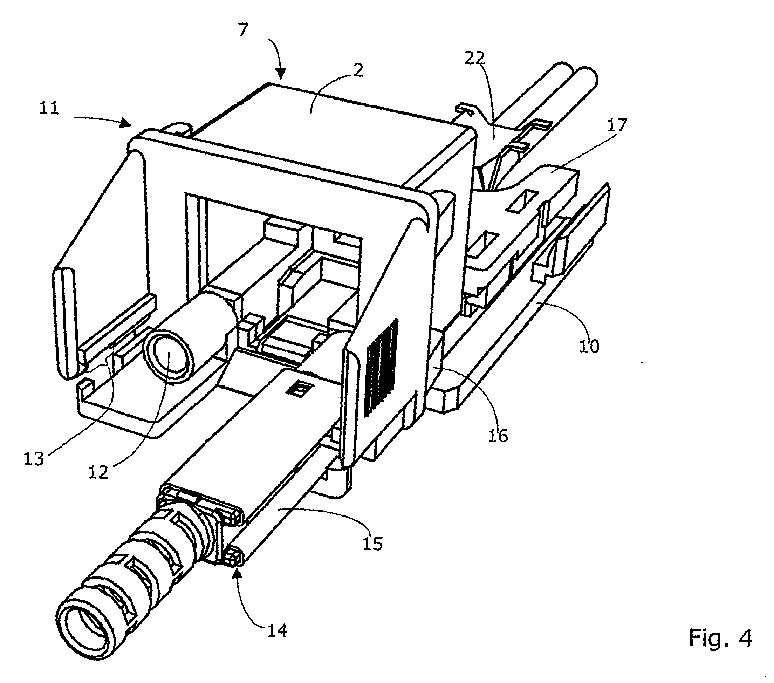

Figur 4 zeigt dieselbe Steckbuchse 7 wie in Figur 3 mit einem für die Aufnahme eines RJ45-Steckers geeigneten Gehäuse 2. Die steckerseitige Front dieses Gehäuses 2 ist mit einem Steckerhalter 11 ergänzt, welcher Steckerführungen 12 und Steckerrastöffnungen 13 aufweist. Diese Steckerführungen 12 und Steckerrastöffnungen 13 erlauben ein geführtes Einstecken eines optischen Leiters und sichern den Kontakt zwischen dem Stecker 14 und der Buchse 7. Vorteilhafterweise weist der Stecker 14 eine Steckerverschlusshülse 15 auf, welche mit Rastnasen versehen ist, die mit den Steckerrastöffnungen13 zusammenwirken. Der gezeigte Steckerhalter 11 weist darüber hinaus Rastelemente 16 auf, welche in Öffnungen einer Montageplatte eingreifen können, um den Steckerhalter 11 an dieser Montageplatte korrekt zu positionieren und zu befestigen. Die Steckerführungen 12 dieses Steckerhalters 11 sind derart voneinander beabstandet und dimensioniert, dass die Normen für optische Steckersysteme gemäss IEEE 1394 erfüllt werden. Insbesondere erlaubt diese Anordnung die Verwendung bestehender POF-Stecker und erfordert keine speziell geformeten Stecker.

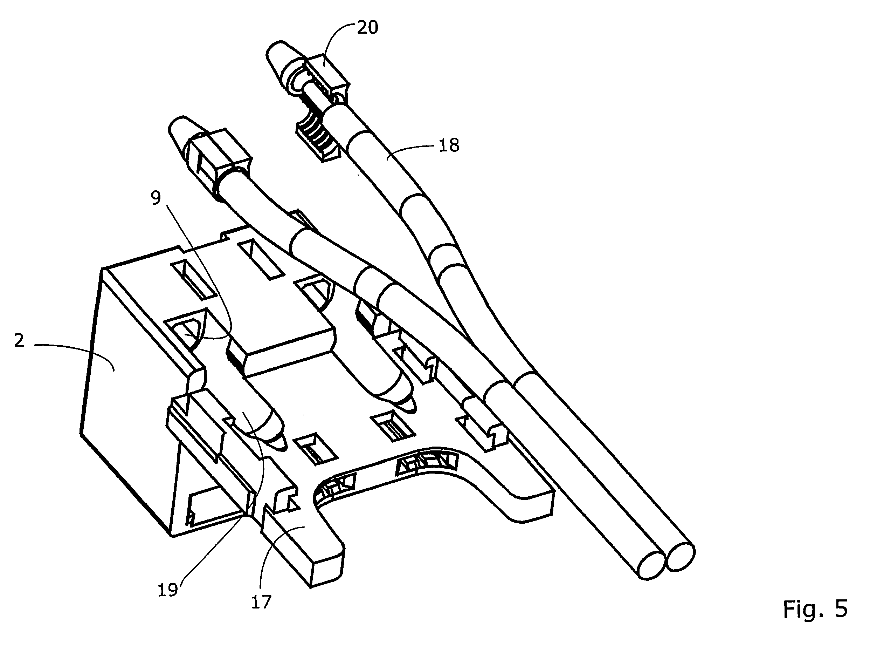

Die Ansicht in Figur 5 zeigt das erfindungsgemässe Steckergehäuse 2 von seiner Rückseite. Insbesondere ist die Gestaltung der an der Rückseite des Gehäuses 2 angebrachten Kabelführungsplatte 17 im Detail ersichtlich. Um die geräteseitigen Kabel, im vorliegenden Ausführungsbeispiel eine Duplex-POF-Leitung 18, am Gehäuse 2 zu befestigen, sind in Richtung der Durchführungskanäle 9 Rillen 19 in der Kabelführungsplatte 17 vorgesehen. In diesen Rillen 19 können die empfindlichen POF-Leiter 18 in vorgesehener Weise geführt und geschützt werden. An dem Kontaktende dieser Leiter, der Ferrule, werden vorzugsweise Klemmen 20 befestigt, deren Geometrie mit der Geometrie des rückseitigen Ausgangs der Durchführungskanäle 9 formschlüssig zusammenwirkt. Durch das Auflegen einer Modul-Halteplatte (nicht dargestellt) auf diese Kabelführungspaltte 17 wird die Duplex-POF-Leitung 18 zusätzlich gehalten und gesichert.

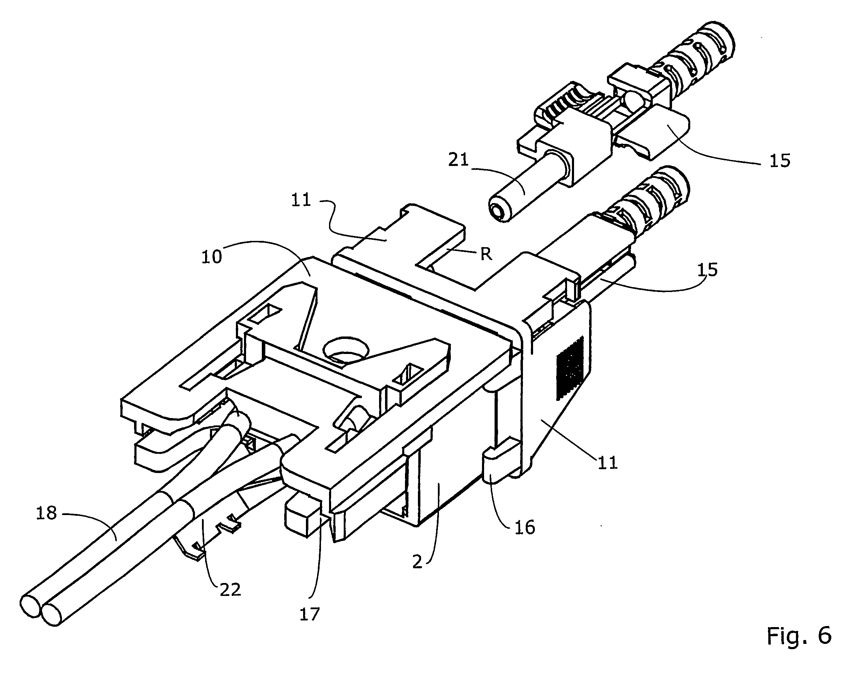

Figur 6 zeigt die erfindungsgemässe Steckbuchse 7 im montierten Zustand. In dieser rückseitigen Ansicht ist steckerseitig des Gehäuses 2 ein Steckerhalter 11 angeordnet. Mit Hilfe dieses Steckerhalters 11 lassen sich die Ferrulen oder Lichtwellenleiter 21 in einfacher Weise einführen, positionieren und sichern. Dabei ist es unerheblich, ob die Lichtwellenleiter 21, respektive deren Ferrulen, individuelle Steckerverschlusshülsen 15 oder einen gemeinsamen und nach IEEE 1394 normierten Steckerabschluss aufweisen. Es versteht sich, dass die Bodenplatte des Steckerhalters 11 eine Aussparung R aufweist, derart, dass die Rastlasche des RJ45-Steckers weiterhin von aussen für die Entriegelung zugänglich ist. Dieser Steckerhalter 11 weist Rastelemente 16 auf, welche in Befestigungslöcher (nicht dargestellt) einer Frontplatte einrasten können, um den Steckerhalter 11 korrekt positionieren und befestigen zu können. Auf der am Gehäuse 2 angebrachte Kabelführungsplatte 17 liegt eine Modul-Halteplatte 10, welche einerseits die montierten Lichtwellenleiter 18 sichert und andererseits ermöglicht, das Gehäuse 2 an vorgegebener Stelle im Gerät, in einem Patchpanel oder in einer Dose zu befestigen. Diese Anordnung ermöglicht es ausserdem, Mittel 22 für die Zugentlastung vorzusehen.

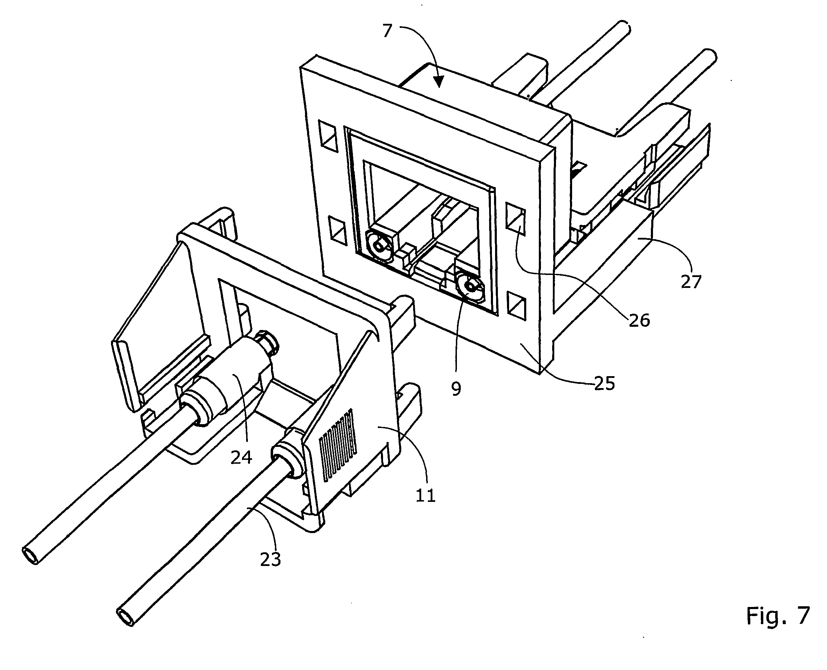

Figur 7 zeigt die erfindungsgemässe Steckbuchse 7 mit jeweiligen Durchgangskanälen 9 für die Verwendung mit Speise- oder Koaxialkabeln 23. Diese Steckbuchse 7 weist im wesentlichen denselben geometrischen Aufbau auf, wie die Steckbuchse gemäss Figuren 3 bis 6. Zur Führung der Speisekabel 23 kann der Steckerhalter 11 angepasst werden und/oder können diese Speisekabel mit geeignet dimensionierten Steckverbindern 24 ausgerüstet sein. Aus Figur 7 ist die Frontplatte 25 mit den dazugehörigen Befestigungslöchern 26 (Smart-Holes) ersichtlich. Um die Steckbuchse 7 und den Steckerhalter 11 gegenseitig ausrichten zu können, weist die Frontplatte 25 zusätzliche Fortsätze 27 auf, zwischen welche die Steckbuchse 7 eingepasst werden kann.

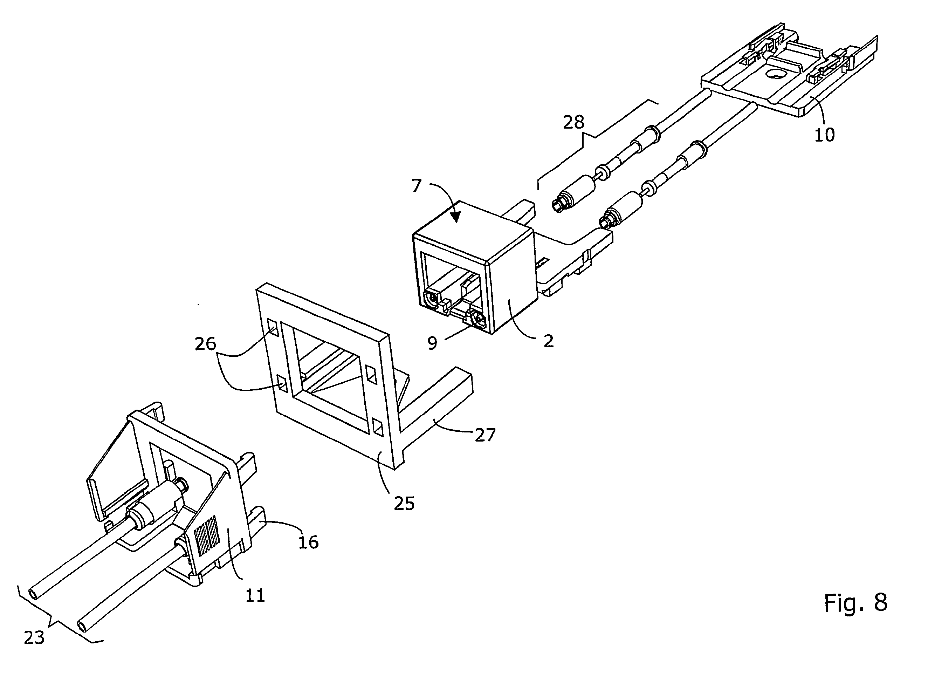

Figur 8 zeigt dieselbe Konfiguration wie in Figur 7, jedoch in Explosionsdarstellung. Diese Darstellung macht den modulartigen Aufbau der erfindungsgemässen Buchse 7 deutlich. Bei der Montage wird an die Rückseite des Gehäuses 2 der geräteseitige Speise- oder Koaxstecker 28 angeschlossen. Dieser Stecker 28 setzt sich wiederum aus verschiedenen Elementen zusammen, um eine korrekt positionierte Verbindung und einen guten elektrischen Kontakt herstellen zu können. Zur Sicherung des Speise- oder Koaxsteckers 28 wird die Modul-Halteplatte 10 aufgebracht, vorzugsweise aufgeschnappt. Das derart mit dem Speise- oder Koaxkabel verbundene Steckgehäuse 2 kann nun hinter der Frontplattenöffnung befestigt werden, vorzugsweise unter Verwendung der Fortsätze 27. Mit Hilfe der Rastelemente 16 und der Befestigungslöcher 26 kann der Steckerhalter 11 an der Frontplatte 25 befestigt werden. Die mit Hilfe des Steckerhalters 11 korrekt geführten und gesicherten Speise- oder Koaxkabel 23 können auf diese Weise korrekt in die Durchführungskanäle 9 eingesteckt werden.

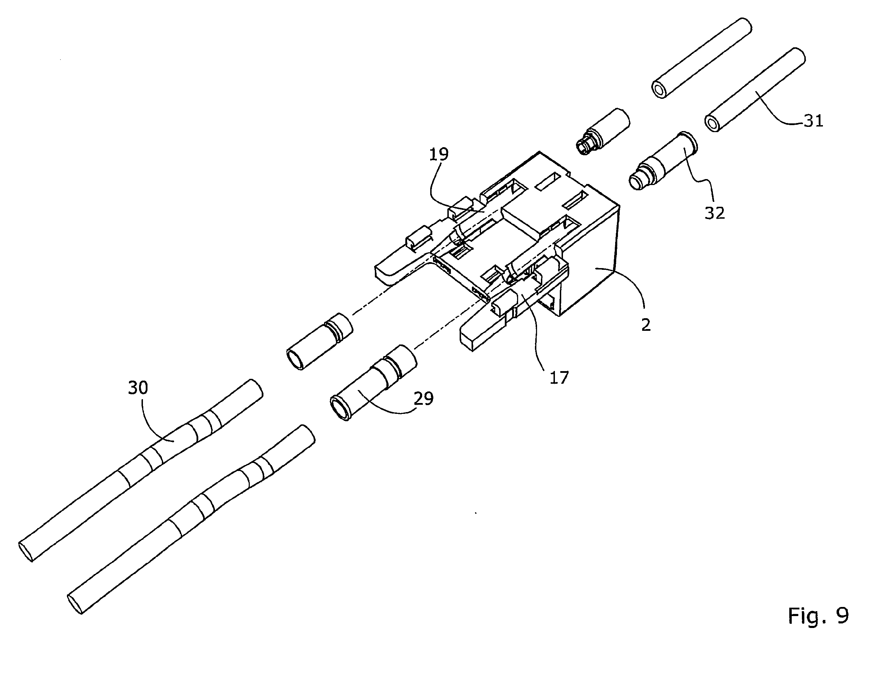

Figur 9 zeigt die Ausgestaltung des erfindungsgemässen Steckgehäuses 2 von seiner Unterseite. Dabei weist die Kabelführungsplatte 17 wiederum Rillen 19 auf, die für die Aufnahme von Koaxial-Steckbuchsen 29 vorgesehen sind. Derartige Koaxial-Steckbuchsen sind bekannt und werden vor der Montage mit den Koax-Kabeln 30 verbunden. Steckerseitig werden die anzuschliessenden Koax-Kabel 31 ebenfalls mit bekannten Koax-Steckverbindem (PIN) 32 verbunden. Es versteht sich, dass bei dieser Ausführungsform im Innern der Durchführungskanäle 9 geeignete Kupplungsstücke mit Dielektrikum und Federkontakt eingesetzt werden, um eine elektrisch einwandfreie Verbindung gewährleisten zu können.

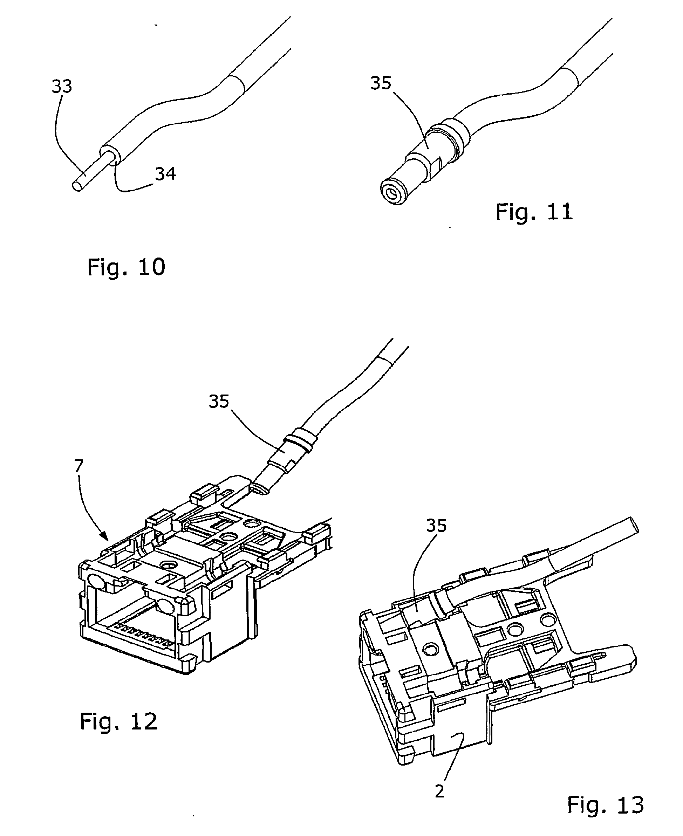

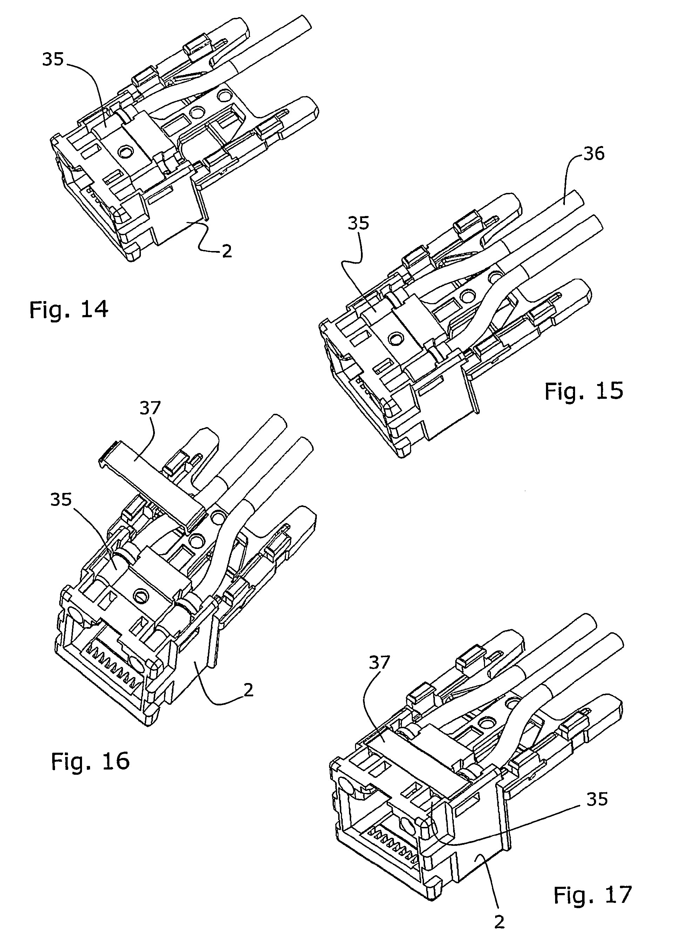

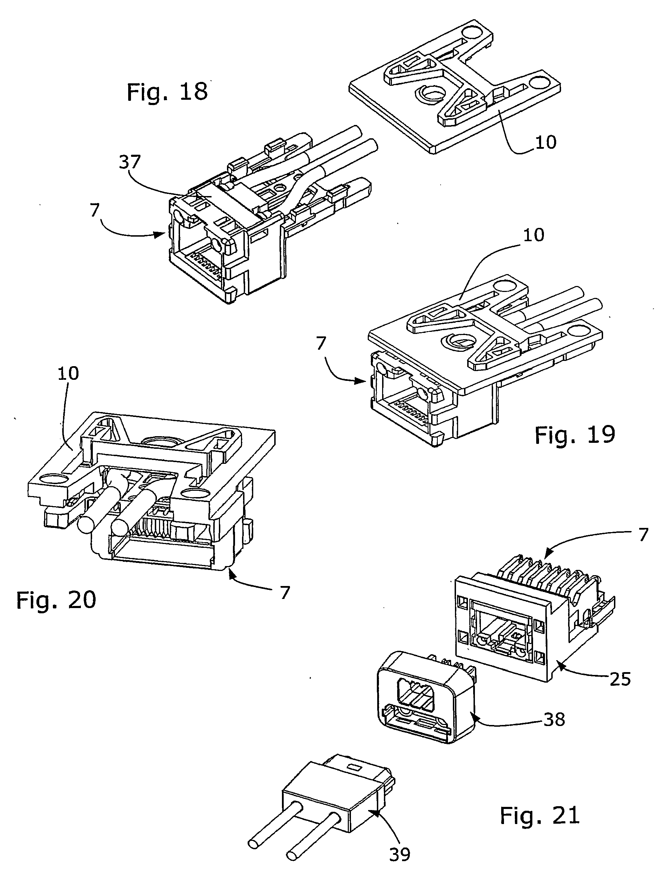

Figur 10 zeigt eine POF (plastic optical fiber) Faser, bei welcher der Mantel 34 im zu montierenden Endbereich entfernt ist. Über die freigelegte Faser 33 wird, wie in Figur 11 gezeigt, eine Ferrule 35 aufgeschoben und fixiert. Der aus der Ferrule 35 herausragende Teil der freigelegten Faser wird zur Ferrule bündig abgeschliffen und poliert, bevor diese, wie in Figur 12 dargestellt, in eine dafür vorgesehene Aufnahme in einer erfindungsgemäss gestalteten SFF-Buchse eingefügt wird. Figuren 13,14 machen das Einschwenken der Ferrule 35 in das Buchsengehäuse 2 und deren exakte Positionierung deutlich. Das zweite Faserkabel 36 wird, wie in Figur 15 gezeigt, analog des ersten Faserkabels vorbereitet und eingefügt. Figuren 16 und 17 zeigen einen Halteclip 37, der dafür sorgt, dass die Ferrulen 35 sicher im Gehäuse 2 gehalten werden. Eine in den Figuren 18 bis 20 dargestellte Halteplatte 10 sichert diesen Halteclip 37 und dient, darüber hinaus der Befestigung der beispielsweise gezeigten RJ45-Hybridbuchse in Steckdosen oder Panels.

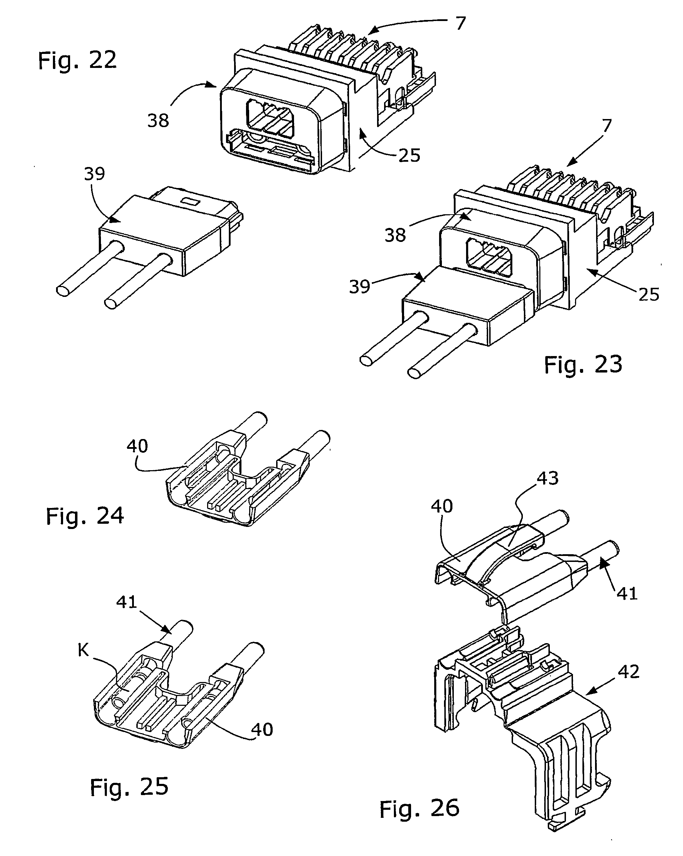

In Figur 21 wird ein Adapterrahmen 38 dargestellt, welcher der Positionierung und Halterung eines normierten PN-POF-Steckers 39 dient und in einfacher Weise auf eine Frontplatte 25 aufgesteckt werden kann. Der Adapterrahmen 38 kann mit Hilfe einer keilförmig auflaufenden Klinke spielfrei mit der Buchse 7 verschnappen und transformiert dadurch die erfindungsgemässe RJ45-Hybridbuchse in eine PN-Kupplung, wie in den Figuren 22, 23 dargestellt. Zur weiteren Nutzung der RJ45-Kontakte ist der Oberteil des Adapters 38 als Splitter gemäss Patent US 6,419,527 ausgebildet.

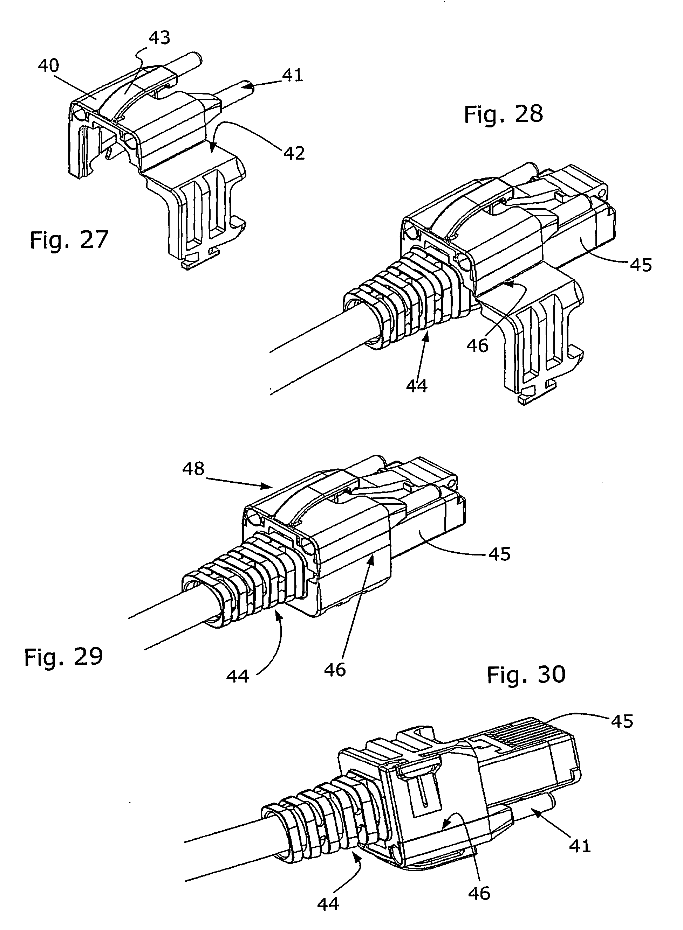

Figuren 24 und 25 zeigen ein Gehäuseunterteil 40 einer anderen Ausführungsform eines mit einem normierten RJ45-Steckers kombinierbaren Zusatzsteckers, welcher so ausgebildet ist, dass dieser formschlüssig auf einen Knickschutz eines RJ45-Steckers passt, wie in Patent US 6,520,796 beschrieben. Dieses Gehäuseunterteil 40 ist für die Montage eines elektrischen Kontaktpaares ausgebildet, wobei die buchsenseitigen Enden dieses Kontaktpaares mit geeignet dimensionierten Steckkontakthülsen 41 versehen sind und die kabelseitigen Enden dieses Kontaktpaares einen Crimp-Kontakt K für die Verbindung mit einem Litzenkabel aufweisen. Figuren 26 und 27 zeigen ein Gehäuseoberteil 42, weiches mit dem Gehäuseunterteil 40 verschnappt werden kann und damit die beiden Kontakte K umschliesst. Das Gehäuseunterteil 40 weist eine Klinke 43 für die Verriegelung eines RJ45-Steckers auf und dient als Berührungsschutz. Figuren 28 bis 30 zeigen, wie dieser Zusatzstecker an einem Knickschutz 44 eines RJ45-Steckers befestigt werden kann und insbesondere mit Hilfe eines Filmschamiers 46 an diesem formschlüssig angebracht werden kann.

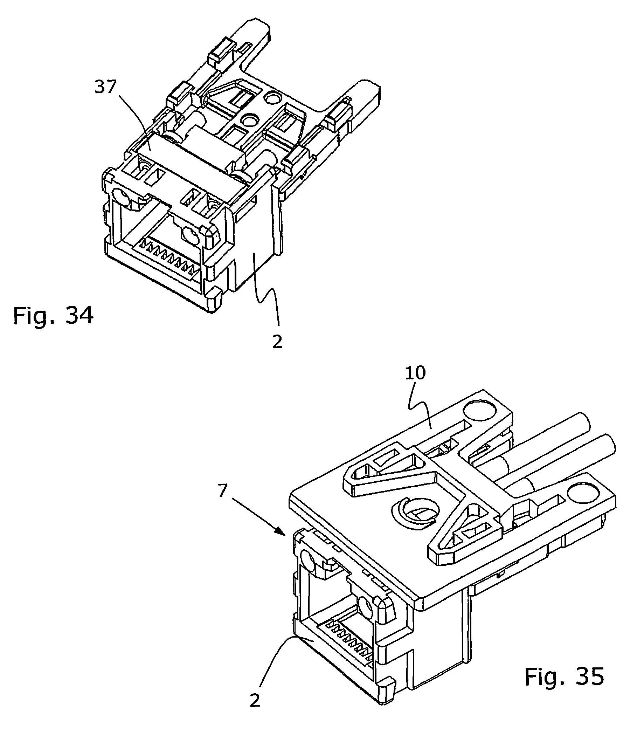

Für die Aufnahme dieser elektrischen Steckkontakthülsen 41 wird die erfindungsgemässe Hybrid-Buchse 7 mit entsprechend dimensionierten Steckkontaktteilen 47 ausgerüstet. Die Montage erfolgt in analoger Weise, wie bei den in Figuren 34 und 35 dargestellten POF-Ferrulen 35.

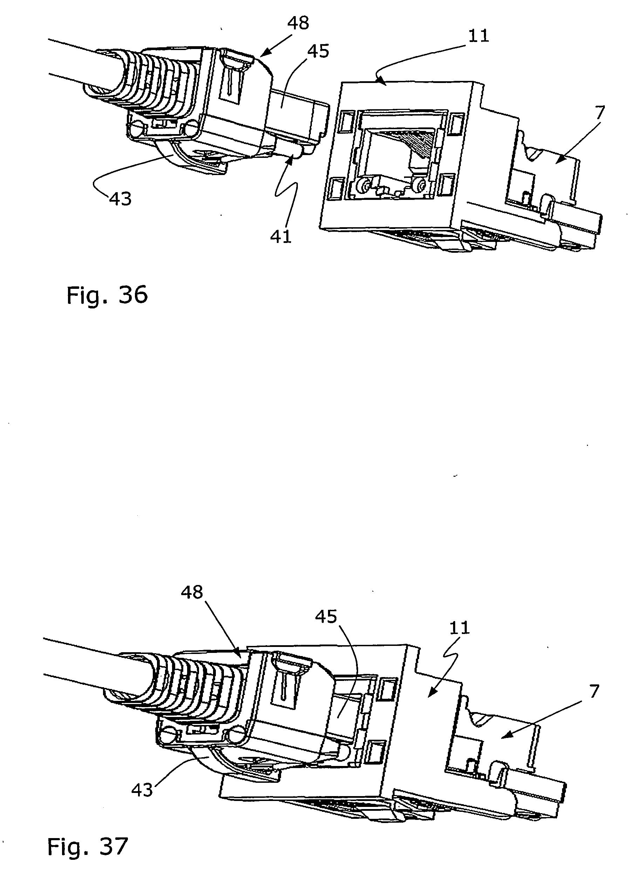

Figuren 36 und 37 zeigen, wie die erfindungsgemässe Hybrid-Steckbuchse 7 mit einem RJ45-Stecker, auf den ein Steckeraufsatz 48 (wie anhand der Figuren 24 - 30 beschrieben) aufgesetzt ist, verbunden werden kann.

Die mit Hilfe der Figuren beschriebenen Ausführungsformen weisen alle ein Gehäuse 2 auf, welches für die Aufnahme eines RJ45-Steckers geeignet ist, und sind mit Durchführungskanälen 9 in den Gehäusebereichen 5 (Bereich zwischen der Kavität für die Aufnahme des RJ45-Steckers und den Aussendimensionen der SFF-Buchsen), insbesondere unmittelbar neben dem Rastbereich 6 respektive der Nut versehen. Es versteht sich, dass diese mit einem derartigen SFF-Gehäuse aufgebaute Universalschnittstelle mit zusätzlichen Ergänzungsmodulen versehen sein kann, um die Montage der jeweiligen Leiter zu erleichtern respektive diese kontrolliert zu führen, zu schützen oder zu befestigen.

Die vorliegende Erfindung erlaubt also die Kombination von Verbindungen unterschiedlicher Verkabelungsarten, ohne die durch die Norm IEC 60603-7 vorgegebenen Querschnitte zu überschreiten und ermöglicht es, die für diese unterschiedlichen Verkabelungsarten verwendeten Stecker - mit den jeweils zugeordneten physikalischen Funktionen - gleichzeitig einzusetzen.

## Patentansprüche

1. Hybrid-Steckbuchse (7) mit einem Gehäuse (2) zum Einbau in ein Gerät, wobei das Gehäuse (2) eine Kavität (4) für die Aufnahme eines normierten RJ45-Steckers aufweist, welcher entlang der Steckrichtung A einsteckbar ist, **dadurch gekennzeichnet, dass** dieses Gehäuse (2) eine am Gehäuse (2) angebrachte Kabelführungsplatte (17) aufweist und für die Kombination von Verbindungen unterschiedlicher Verkabelungsart in einem neben der Kavität (4) liegenden stufenförmigen Gehäusebereich (5) neben dem Rastbereich (6) Mittel für die gleichzeitige Aufnahme eines elektrischen und/oder optischen Bauteils aufweist, welche Mittel Aussparungen und/oder Durchführungskanäle (9) für die Aufnahme von elektrischen und/oder optischen Steckern umfassen, derart, dass die elektrischen und/oder optischen Bauteile geräteseitig in Steckrichtung A aus dem Gehäuse (2) herausführbar sind.

2. Hybrid-Steckbuchse (7) nach Anspruch 1, **dadurch gekennzeichnet, dass** das Gehäuse (2) ein Small-Form-Factor-Gehäuse ist.

3. Hybrid-Steckbuchse (7) nach Anspruch 1 oder 2, **dadurch gekennzeichnet, dass** die Mittel für die Aufnahme eines elektrischen und/oder optischen Bauteils Aussparungen und/oder Durchführungskanäle (9) in dem unmittelbar neben einem Rastbereich (6) liegenden Gehäusebereich (5) sind.

4. Hybrid-Steckbuchse (7) nach Anspruch 1 oder 2, **dadurch gekennzeichnet, dass** die Mittel für die Aufnahme eines elektrischen und/oder optischen Bauteils Aussparungen und/oder Durchführungskanäle (9) in einem, einem Rastbereich (6) gegenüberliegenden Gehäusebereich (5) sind.

5. Hybrid-Steckbuchse (7) nach Anspruch 1oder 2, **dadurch gekennzeichnet, dass** die Mittel für die Aufnahme eines elektrischen und/oder optischen Bauteils Aussparungen und/oder Durchführungskanäle (9) in einem seitlich der Kavität (4) liegenden Gehäusebereich (5) sind.

6. Hybrid-Stecker mit einem RJ45 Stecker und elektischen und/oder optischen Steckern für die Verwendung mit einer Hybrid-Steckbuchse (7) gemäss Anspruch 1.

7. Hybrid-Stecker nach Anspruch 6, **dadurch gekennzeichnet, dass** dieser einen auf einen normierten RJ45-Stecker formschlüssig aufsetzbaren Zusatzstecker (48) umfasst.

8. Hybrid-Stecker nach Anspruch 7, **dadurch gekennzeichnet, dass** der Zusatzstecker (48) eine Klinke (43) für die Verriegelung eines RJ45-Steckers aufweist.

9. Zusatzstecker (48) zur Bildung eines Hybrid-Steckers aus dem Zusatzstecker und einem RJ45 Stecker für die Verwendung mit einer Hybrid-Steckbuchse (7) gemäss Anspruch 1.

## Claims

1. Hybrid socket (7) comprising a housing (2) for installation in a device, wherein the housing (2) has a cavity (4) for receiving a standardised RJ45 plug which can be inserted along the insertion direction A, **characterised in that** this housing (2) has a cable guide plate (17) and, for combining connections involving different types of cable, has means for simultaneously receiving an electrical and/or optical component in a stepped housing region (5) next to the snap-in region (6), said stepped housing region being located next to the cavity (4), which means comprise cutouts and/or through-channels (9) for receiving electrical and/or optical plugs such that the electrical and/or optical components can be guided out of the housing (2) on the device side in the insertion direction A.

2. Hybrid socket (7) according to Claim 1, **characterised in that** the housing (2) is a small form factor housing.

3. Hybrid socket (7) according to Claim 1 or 2, **characterised in that** the means for receiving an electrical and/or optical component are cutouts and/or through-channels (9) in the housing region (5) located immediately next to a snap-in region (6).

4. Hybrid socket (7) according to Claim 1 or 2, **characterised in that** the means for receiving an electrical and/or optical component are cutouts and/or through-channels (9) in a housing region (5) located opposite a snap-in region (6).

5. Hybrid socket (7) according to Claim 1 or 2, **characterised in that** the means for receiving an electrical and/or optical component are cutouts and/or through-channels (9) in a housing region (5) located to the side of the cavity (4).

6. Hybrid plug comprising an RJ45 plug and electrical and/or optical plugs, for use with a hybrid socket (7) according to Claim 1.

7. Hybrid plug according to Claim 6, **characterised in that** it comprises an auxiliary plug (48) which can be placed onto a standardised RJ45 plug in a form-fitting manner.

8. Hybrid plug according to Claim 7, **characterised in that** the auxiliary plug (48) has a latch (43) for locking on an RJ45 plug.

9. Auxiliary plug (48) for forming a hybrid plug from the auxiliary plug and an RJ45 plug, for use with a hybrid socket (7) according to Claim 1.

## Revendications

1. Connecteur enfichable hybride (7) avec un boîtier (2) pour le montage dans un appareil, le boîtier (2) comportant une cavité (4) destinée à recevoir une prise RJ45 normalisée, qui peut être enfichée suivant la direction d'enfichage (A), **caractérisé en ce que** ce boîtier (2) comporte une plaque de guidage de câble (17) montée sur le boîtier (2) et, en vue de combiner des liaisons entre des types de câblage différents, comporte à côté de la zone d'encliquetage (6) dans une zone du boîtier (5) en forme de gradin, située à côté de la cavité (4), des moyens destinés à recevoir simultanément un composant électrique et/ou optique, lesquels moyens comportent des évidements et/ou des canaux débouchants (9) destinés à recevoir des fiches mâles électriques et/ou optiques, de telle sorte que les composants électriques et/ou optiques peuvent être guidés hors du boîtier (2) du côté appareil dans la direction d'enfichage (A).

2. Connecteur enfichable hybride (7) selon la revendication 1, **caractérisé en ce que** le boîtier (2) est un boîtier à faible encombrement.

3. Connecteur enfichable hybride (7) selon la revendication 1 ou 2, **caractérisé en ce que** les moyens destinés à recevoir un composant électrique et/ou optique sont des évidements et/ou des canaux débouchants (9) dans la zone du boîtier (5) située directement à côté d'une zone d'encliquetage (6).

4. Connecteur enfichable hybride (7) selon la revendication 1 ou 2, **caractérisé en ce que** les moyens destinés à recevoir un composant électrique et/ou optique sont des évidements et/ou des canaux débouchants (9) dans une zone du boîtier (5) située en face d'une zone d'encliquetage (6).

5. Connecteur enfichable hybride (7) selon la revendication 1 ou 2, **caractérisé en ce que** les moyens destinés à recevoir un composant électrique et/ou optique sont des évidements et/ou des canaux débouchants (9) dans une zone du boîtier (5) située sur le côté de la cavité (4).

6. Fiche mâle hybride comportant une prise RJ45 et des fiches mâles électriques et/ou optiques, destinée à être utilisée avec un connecteur enfichable hybride (7) selon la revendication 1.

7. Fiche mâle hybride selon la revendication 6, **caractérisée en ce que** celle-ci comporte une fiche mâle supplémentaire (48) apte à être posée par complémentarité de forme sur une prise RJ45 normalisée.

8. Fiche mâle hybride selon la revendication 7, **caractérisée en ce que** la fiche mâle supplémentaire (48) comporte un cliquet (43) pour le verrouillage d'une prise RJ45.

9. Fiche mâle supplémentaire (48) pour former une fiche mâle hybride à partir de la fiche mâle supplémentaire et d'une prise RJ45, pour l'utilisation avec un connecteur enfichable hybride (7) selon la revendication 1.
